# EUROPEAN PATENT SPECIFICATION

(11) **EP 2 228 123 B1**
(45) Date of publication and mention of the grant of the patent: **20.08.2014**
(21) Application number: 10152993.1
(22) Date of filing: 09.02.2010
(51) Int. Cl.: B01D 61/44, C01B 33/141, C01B 33/32, C02F 1/469, C23F 1/46

(54) **Electrodialysis method for purifying of silicate-containing potassium hydroxide etching solution**
Elektrodialyseverfahren zur Reinigung einer silikathaltigen Kaliumhydroxid-Ätzlösung
Procédé d'électrodialyse pour la purification d'une solution de gravure à base d'hydroxyde de potassium contenant du silicate

(30) Priority: 20.02.2009 TW 98105407
(43) Date of publication of application: 15.09.2010
(73) Proprietor: Asia Union Electronic Chemical Corporation, Taipei (TW); KiSmart Corp., Taipei City 104 (TW)
(72) Inventor: Yang, Wei-Liang, Hsinchu County 300 (TW); Dove, Curtis Douglas, Kaohsiung County 831 (TW); Chang, Goang-Cheng, Kaohsiung (TW)
(74) Representative: Becker Kurig Straus

(56) References cited:
- JP-A- 5 306 112
- US-A- 5 118 399
- US-B2- 7 285 163

## Description

### Background Of The Invention

### Field of the Invention

The subject invention relates to an electrodialysis method, and more particularly, to an electrodialysis method for the treatment of a silicate-containing potassium hydroxide etching waste solution.

### Descriptions of the Related Art

Owing to such advantages as high flexibility in operation, small space occupation of equipment, high purity of resulting products and good adaptability to conductivity of materials to be processed, the electrodialysis (ED) process is known as a waste solution process that is commonly used, for example, for radioactive waste solution treatment, recovery of valuable metals from waste electroplating solutions, etc. Also, the electrodialysis process may also be used in such processes as production of table salts or pre-treatment of boiler water. The principle of the electrodialysis process is that the ion exchange membranes having distinct properties are used to selectively separate ions in the water, and the migration of the ions in the water is driven by positive and negative direct currents (DC) to attract ions. In other words, this process utilizes the characteristic that the cations can only penetrate through cation exchange membranes while the anions can only penetrate through anion exchange membranes. Under the action of the applied DC electric field, the anions in the water migrate towards the anode while the cations in the water migrate towards the cathode, thereby accomplishing the purpose of recovering valuable substances from the waste solution.

US 5 118 399 A discloses a method, wherein multivalent metal hydroxide is separated as a solid from an alkali hydroxide or from another multivalent metal hydroxide in an electrodialytic cell. The separation process is regulated by varying the pH or concentration of alkali hydroxide in a feed compartment electrolyte by matching the rate alkali cations are fed and removed from the electrolyte.

US 7 285 163 B2 discloses an alkali silicate aqueous solution having intermediate characteristics between water glass and colloidal silica and having a high molar ratio, a high silicon content and a high anionic activity. A process for preparing an alkali silicate aqueous solution comprises dealkalizing a starting alkali silicate aqueous solution by means of an electro-dialysis device, and then optionally concentrating the dealkalized solution by a reverse osmosis membrane method.

JP 05 306112 A discloses a pretreatment method by electric dialysis by a dialysis device consisting of a dialysis chamber separated by two cation exchange membranes on both sides, and an anode chamber and a cathode chamber on both sides of the dialysis chamber. The dialysis chamber is filled in with an alkali silicate coln., while an org. acid such as formic acid or oxalic acid is added to the anode chamber.

The etching waste solutions of general semiconductor industries contain in addition to strong alkaline etching solutions (e.g., potassium hydroxide), also silicon dioxide etched away from semiconductor substrates and metal oxides (e.g., potassium oxide) formed during the reactions. The silicon dioxide and metal oxides often form in the waste etching solutions colloidal silicates, which are generally known as water glass and may be normally represented by a general formula MₓO_{y} · nSiOₓ (where M represents a metal such as Na or K, coefficients x and y vary with species of the metal, and n also varies with species of the metal and is within a specific range). Therefore, if the etching waste solutions are directly introduced into a single-membrane electrodialysis system for recovery, the silicates contained in the etching waste solutions tend to cause clogging to the ion exchange membrane of the electrodialysis system, resulting in deactivation or even loss of the ion exchange capability thereof. Moreover, the anode is also liable to be surrounded and absorbed by the silicates, and consequently fails in efficacy. Hence, no electrodialysis method has been provided up to now that is capable of effectively treating silicate-containing waste solutions for separation and recovery of useful substances therefrom.

Etching solutions currently used in semiconductor industries are mostly potassium hydroxide or sodium hydroxide solution. If such etching waste solutions are subjected to the waste treatment or directly used to produce products of low economic values, poor economic benefits would result.

In view of this, the subject invention provides an electrodialysis method capable of treating a potassium silicate-containing waste solution and solving the problem of clogging the ion exchange membranes during electrodialysis. This method can not only recover potassium ions from the waste solution effectively and economically, but also recover potassium silicates with a low content of potassium for use in other industrial applications (e.g., for use in producing water glass after being concentrated), thereby achieving the goal of waste reduction and resource recycling effectively.

### Summary Of The Invention

The present invention is provided by appended claim 1.

Some embodiments implemented for the subject invention are described in detail in the following paragraphs accompanying the appended drawing for people skilled in this field to well appreciate the above purpose, technical features, and advantages of the subject invention.

### Brief Description Of The Drawings

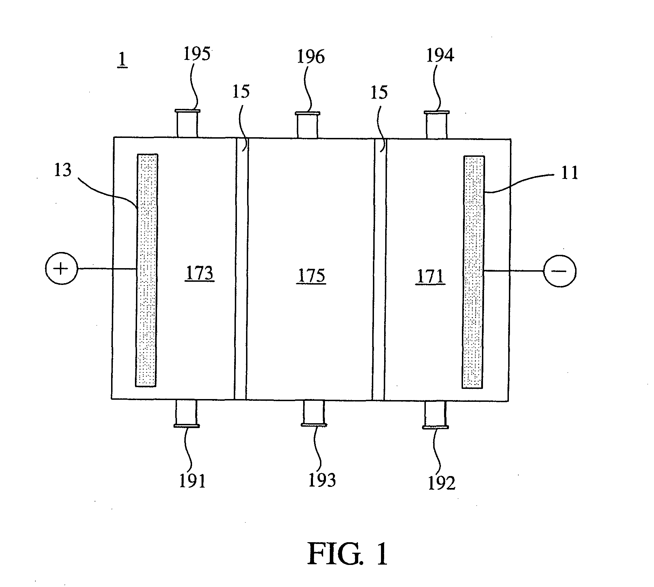

**FIG. 1** is an embodiment of equipment for implementing the electrodialysis method of the subject invention.

### Description Of The Preferred Embodiment

Hereinafter, some embodiments of the subject invention will be described in detail with reference to the attached drawing. Rather than being depicted in the practical scale, dimensions of elements and regions in the attached drawing may be exaggerated for the sake of clarity.

Because the potassium hydroxide etching waste solutions of the semiconductor industries contain potassium hydroxide that are not consumed completely, potassium oxide, as well as, silicon dioxide resulting from etching silicon substrates, the solutions tend to form colloidal solutions of potassium silicates. When recovering substances from such waste solutions through the electrodialysis process, the potassium silicates tend to clog the ion exchange membranes, resulting in deactivation or even loss of the ion exchange capability thereof. No effective electrodialysis method adapted to recover such silicate-containing waste solutions has been provided up to now.

It has been found that, the voltage and current applied during the electrodialysis process may be regulated to control the mole ratio of potassium oxide to silicon dioxide in the waste solution such that the silicate-containing potassium hydroxide etching waste solution remains in a solution state instead of forming a colloid that can clog the ion exchange membrane. In this way, potassium ions can be recovered through the electrodialysis process while the remaining silicates with a low potassium content can still be used in other industrial applications.

Accordingly, the subject invention provides an electrodialysis method for the treatment of a silicate-containing potassium hydroxide etching waste solution, comprising:
providing a reaction tank **1** as shown in **FIG. 1****,** wherein the reaction tank **1** includes a cathode **11,** an anode **13** and two cation dialysis membranes **15,** and is divided by the cation dialysis membranes **15** into a cathode chamber **171,** an anode chamber **173** and a waste solution chamber **175** located therebetween;
filling a sulfuric acid solution through an anode inlet **191** into the anode chamber **173,** wherein the concentration of the sulfuric acid solution used is typically adapted to initiate an oxidation reaction of the solution in the anode chamber **173,** and generally ranges from about 1 wt% to about 20 wt%, preferably from about 2 wt% to about 15 wt%, and more preferably from about 3 wt% to about 10 wt%;
filling a potassium hydroxide solution through a cathode inlet **192** into the cathode chamber **171,** wherein the concentration of the potassium hydroxide solution used is typically adapted to initiate a reduction reaction of the solution in the cathode chamber **171,** and generally ranges from about 1 wt% to about 50 wt%, preferably from about 2 wt% to about 30 wt%, and more preferably from about 2 wt% to about 10 wt%;
introducing a silicate-containing potassium hydroxide etching waste solution to be treated through a waste solution inlet **193** into the waste solution chamber **175,** wherein for the etching waste solutions generated in typical etching processes, the concentration of potassium hydroxide generally ranges from about 1 wt% to about 50 wt%; and
applying a voltage and a current density to each of the chambers by connecting a negative terminal and a positive terminal of a DC power supply to the cathode **11** and the anode **13** respectively, thereby to render potassium ions to transport from the waste solution chamber **175** through the cation dialysis membrane **15** to the cathode chamber **171.**

When the electrodialysis method of the subject invention is performed, the potassium ions in the silicate-containing potassium hydroxide etching waste solution are driven by the applied voltage to migrate from the waste solution chamber **175** through the cation dialysis membrane **15** into the cathode chamber **171** where they are reduced into potassium hydroxide with concomitant hydrogen gas. As a result, the concentration of the potassium hydroxide solution in the cathode chamber **171** is increased, and then, the solution is discharged from a cathode outlet **194.** On the other hand, an oxidation reaction is conducted in the anode chamber **173** in which the water is electrolyzed into oxygen gas, and the resulting oxygen gas is discharged from an anode outlet **195.** In the waste solution chamber **175,** a silicate-containing solution with a low potassium content results and is discharged from a waste solution outlet **196.**

The concentrated potassium hydroxide solution obtained in the cathode chamber **171** can be used directly as an etching solution in semiconductor industries, or for other purposes. The resulting hydrogen gas may be used as a fuel in fuel cells or steam boilers, or for other purposes. The silicate-containing solution in the waste solution chamber **175** may be concentrated to form water glass for industrial use, such as for use in inorganic paints or adhesives, or for agricultural use, such as for use as a potassium fertilizer or an antibacterial agent of fruit trees. The oxygen gas produced in the anode chamber **173** is also of great economic value.

According to the method of the subject invention, the applied voltage and current are, in principle, designed. The voltage generally ranges from about 2 V to about 25 V, and preferably from about 4 V to about 20 V; the current density generally ranges from about 1,000 A/m² to about 6,000 A/m². Potassium ions in the waste solution are driven from the waste solution chamber **175** through the cation dialysis membrane **15** into the cathode chamber **171.** In particular, a mole ratio of silicon dioxide to potassium oxide in the waste solution chamber **15** is controlled to be within a particular range, i.e., less than about 10, and more preferably, less than about 5.0, thereby to avoid the formation of colloids which would otherwise clog the ion dialysis membranes. According to an embodiment of the subject invention, the electrodialysis process is performed with a current density of about 2,000 A/m2 and a voltage ranging from about 5 V to about 15 V.

There is no particular limitation to the anode material useful for the subject invention. For example, the substrate material of the anode is typically selected from titanium (Ti), tantalum (Ta), nickel (Ni) or the like metals. The surface of the substrate may be coated with a non-deactivatable and electrocatalytic film, the material of which may be an oxide of platinum (Pt), iridium(Ir), rhodium (Rh), ruthenium (Ru), zirconium (Zr), titanium (Ti) or the like metals, or a conductive (discharging) substance comprising at least one of the aforesaid metal oxides. For example, the film may be formed by coating an organic compound comprising at least one of the aforesaid metals (e.g., iridium alcoholates, ruthenium alcoholates, tantalum alcoholates, or titanium alcoholates, where the alcohols used may be such as methanol, ethanol, propanol, butanol, isopropanol, isobutanol and the like.) on the surface of the metallic substrate, followed by a sintering process to remove the organic components. In an embodiment of the subject invention, a dimensionally stable anode (DSA) is used, i.e., an insoluble anode formed by coating a film of a tantalum oxide, a ruthenium oxide, a titanium oxide or an iridium oxide on a substrate made of titanium, tantalum, nickel or the like, because this kind of anodes has such advantages as preferable electrocatalysis and long service life of more than one year.

There is no particular limitation to the cathode material useful in the subject invention. For example, the cathode material may be nickel, iron, stainless steel, nickel-plated titanium, graphite, carbon steel, or a combination thereof. In an embodiment of the subject invention, the stainless steel is used.

Additionally, any suitable cation dialysis membrane may be used in the method of the subject invention. Typically, an acid- and alkaline-resistant perfluorinated cation exchange membrane is used, such as those selected from a group consisting of a perfluorosulfonic acid membrane, a perfluorocarboxylic acid membrane, a fluorinated membrane of perfluorosulfonic acid/perfluorocarboxylic acid and a carbon polymer membrane. In an embodiment of the subject invention, a perfluorosulfonic acid cation exchange membrane is used.

To further illustrate the subject invention, an example will be further described hereinbelow with reference to the attached drawing.

### [Example 1]

According to the method of the subject invention, an electrodialysis process for the treatment of a silicate-containing potassium hydroxide etching waste solution was carried out in the reaction tank **1** as shown in **FIG. 1** using the following parameters:
operating voltage: 5 to 15 V
operating temperature: 30 to 70°C
current density: 2,000 A/m²
area of the mass transport electrode: 0.05 m²
anode material: DSA
cathode material: stainless steel
cation dialysis membrane: perfluorosulfonic acid cation exchange membrane

In this example, a 5 wt% sulfuric acid solution was filled through the anode inlet **191** into the anode chamber **173,** a 2 wt% potassium hydroxide solution was filled through the cathode inlet **192** into the cathode chamber **171,** and a potassium silicate-containing waste solution to be treated (containing potassium hydroxide at a concentration of about 10 wt% to about 45 wt%) was introduced through the waste solution inlet **193** into the waste solution chamber **175.** Afterwards, an electrodialysis process was carried out in batch under conditions of a constant current and an initial voltage of 5 V, and deionized water was replenished into the anode chamber **173** from time to time to maintain a constant liquid level. According to the voltage increase readings, the mole ratio of silicon dioxide to potassium oxide in the solution within the waste solution chamber **175** was controlled to be less than 5, and the reference operation end of the batch is attained when the voltage increased to 12 V.

Hydrogen gas and a potassium hydroxide solution were obtained in a considerable amount from the cathode outlet **194** of the cathode chamber **171.** The concentration of the recovered potassium hydroxide solution could be increased from 2% to 50%. From the waste solution outlet **196** of the waste solution chamber **175,** a potassium silicate water glass solution with a low potassium content having a solid content of about 2 wt% to about 10% was obtained, which could be concentrated to produce 10 wt% to 40 wt% potassium silicate water glass products. From the anode outlet **195** of the anode chamber **173,** oxygen gas and a 5 wt% sulfuric acid solution were obtained. After the oxygen gas was separated and stored, the sulfuric acid solution could be reused in the manufacturing process.

According to the above descriptions, besides that the electrodialysis method of the subject invention can be used to treat a silicate-containing potassium hydroxide etching waste solution and efficiently recover potassium ions, all byproducts thus produced present an economic value and can be used in industrial applications (e.g., the hydrogen gas may be used as a fuel, and the silicate-containing solution with a low potassium content may be further concentrated to produce water glass). The potassium hydroxide solution having a high concentration obtained in the above example may be reused directly as an etching solution in the semiconductor industries and exhibits considerable economic value. Furthermore, the two-membranes-and-three-chambers design including two cation membranes can prevent the anode from directly being contact with the waste solution to be treated which has a complex composition and prevent ions contained in the waste solution from migrating into the anode chamber, thereby prolonging the service life of the anode and, consequently, enhancing the durability of the equipment as a whole and improving the economic benefits.

## Claims

1. An electrodialysis method for the treatment of a silicate-containing potassium hydroxide etching waste solution, comprising:
providing a reaction tank including a cathode, an anode, and two cation dialysis membranes, wherein the reaction tank is divided by the cation dialysis membranes into a cathode chamber, an anode chamber and a waste solution chamber located therebetween;
filling a sulfuric acid solution into the anode chamber;
filling a potassium hydroxide solution into the cathode chamber; and
introducing a silicate-containing potassium hydroxide etching waste solution into the waste solution chamber; the electrodialysis method being **characterized in** further comprising:
applying a voltage and a current density to each of the chambers to render potassium ions to transport from the waste solution chamber through the cation dialysis membrane to the cathode chamber and to control the mole ratio of silicon dioxide and potassium oxide in the waste solution chamber to be less than 10.

2. The method according to claim 1, wherein the concentration of the sulfuric acid solution ranges from 1 wt% to 20 wt%.

3. The method according to claim 2, wherein the concentration of the sulfuric acid solution ranges from 2 wt% to 15 wt%.

4. The method according to claim3, wherein the concentration of the sulfuric acid solution ranges from 3 wt% to 10 wt%.

5. The method according to claim 1, wherein the concentration of the potassium hydroxide solution ranges from 1 wt% to 50 wt%.

6. The method according to claim 5, wherein the concentration of the potassium hydroxide solution ranges from 2 wt% to 30 wt%.

7. The method according to claim 6, wherein the concentration of the potassium hydroxide solution ranges from 2 wt% to 10 wt%.

8. The method according to claim 1, wherein the concentration of potassium hydroxide in the silicate-containing potassium hydroxide etching waste solution ranges from 1 wt% to 50 wt%.

9. The method according to claim 1, wherein the cation dialysis membranes are perfluorinated cation exchange membranes.

10. The method according to claim 9, wherein the cation dialysis membranes are selected from a group consisting of a perfluorosulfonic acid membrane, a perfluorocarboxylic acid membrane, a fluorinated membrane of perfluorosulfonic acid/perfluorocarboxylic acid and a carbon polymer membrane.

11. The method according to claim 1, wherein the voltage ranges from 2 V to 25 V and the current density ranges from 1,000 A/m² to 6,000 A/m².

12. The method according to claim 11, wherein the voltage ranges from 4 V to 20 V.

13. The method according to claim 12, wherein the voltage ranges from 5 V to 15 V and the current density is 2,000 A/m².

14. The method according to claim 1, wherein the step of applying a voltage and a current density to each of the chambers comprises generating hydrogen gas in the cathode chamber and oxygen gas in the anode chamber.

15. The method according to claim 1, wherein the molar ratio of silicon dioxide to the potassium oxide is less than 5.

## Patentansprüche

1. Elektrodialyseverfahren zur Behandlung einer silikathaltigen Kaliumhydroxidätzabfalllösung, umfassend:
Bereitstellen eines Reaktionsbehälters, der eine Kathode, eine Anode und zwei Kationendialysemembranen beinhaltet, wobei der Reaktionsbehälter durch die Kationendialysemembranen in eine Kathodenkammer, eine Anodenkammer und eine Abfalllösungskammer getrennt wird, die sich dazwischen befindet;
Einfüllen einer Schwefelsäurelösung in die Anodenkammer;
Einfüllen einer Kaliumhydroxidlösung in die Kathodenkammer; und
Einführen einer siliziumhaltigen Kaliumhydroxidätzabfalllösung in die Abfalllösungskammer, wobei das Elektrodialyseverfahren **dadurch gekennzeichnet ist, dass** es weiterhin umfasst:
Anwenden einer Spannung und einer Stromdichte an jeder der Kammern, um einen Transport von Kaliumionen von der Abfalllösungskammer durch die Kationendialysemembran zu der Kathodenkammer durchzuführen und, um das Molverhältnis von Siliziumdioxid und Kaliumoxid in der Abfalllösungskammer zu steuern, so dass es geringer als 10 ist.

2. Verfahren gemäß Anspruch 1, wobei die Konzentration der Schwefelsäurelösung von 1 Gew.-% bis 20 Gew.-% reicht.

3. Verfahren gemäß Anspruch 2, wobei die Konzentration der Schwefelsäurelösung von 2 Gew.-% bis 15 Gew.-% reicht.

4. Verfahren gemäß Anspruch 3, wobei die Konzentration der Schwefelsäurelösung von 3 Gew.-% bis 10 Gew.-% reicht.

5. Verfahren gemäß Anspruch 1, wobei die Konzentration der Kaliumhydroxidlösung von 1 Gew.-% bis 50 Gew.-% reicht.

6. Verfahren gemäß Anspruch 5, wobei die Konzentration der Kaliumhydroxidlösung von 2 Gew.-% bis 30 Gew.-% reicht.

7. Verfahren gemäß Anspruch 6, wobei die Konzentration der Kaliumhydroxidlösung von 2 Gew.-% bis 10 Gew.-% reicht.

8. Verfahren gemäß Anspruch 1, wobei die Konzentration von Kaliumhydroxid in der siliziumhaltigen Kaliumhydroxidätzabfalllösung von 1 Gew.-% bis 50 Gew.-% reicht.

9. Verfahren gemäß Anspruch 1, wobei die Kationendialysemembranen perfluorierte Kationenaustauschmembranen sind.

10. Verfahren gemäß Anspruch 9, wobei die Kationendialysemembranen aus einer Gruppe ausgewählt sind, die aus einer Perfluorsulfonsäuremembran, einer Perfluorcarboxylsäuremembran, einer fluorierten Membran aus Perfluorsulfonsäure/Perfluorcarboxylsäure und einer Kohlenstoffpolymermembran besteht.

11. Verfahren gemäß Anspruch 1, wobei die Spannung von 2 V bis 25 V reicht und die Stromdichte von 1000 A/m² bis 6000 A/m² reicht.

12. Verfahren gemäß Anspruch 11, wobei die Spannung von 4 V bis 20 V reicht.

13. Verfahren gemäß Anspruch 12, wobei die Spannung von 5 V bis 15 V reicht und die Stromdichte 2000 A/m² ist.

14. Verfahren gemäß Anspruch 1, wobei der Schritt des Anwendens einer Spannung und einer Stromdichte an jeder der Kammern das Erzeugen von Wasserstoffgas in der Kathodenkammer und von Sauerstoffgas in Anodenkammer umfasst.

15. Verfahren gemäß Anspruch 1, wobei das Molverhältnis des Siliziumdioxids zu dem Kaliumoxid geringer als 5 ist.

## Revendications

1. Procédé d'électrodialyse pour le traitement d'une solution de déchets de gravure à base d'hydroxyde de potassium contenant du silicate, comprenant les étapes consistant à :
fournir un bac de réaction incluant une cathode, une anode, et deux membranes de dialyse par cations, dans lequel le bac de réaction est divisé par les membranes de dialyse par cations en une chambre cathodique, une chambre anodique et une chambre de solution de déchets située entre celles-ci ;
remplir d'une solution d'acide sulfurique la chambre anodique ;
remplir d'une solution d'hydroxyde de potassium la chambre cathodique ; et
introduire une solution de déchets de gravure à base d'hydroxyde de potassium contenant du silicate dans la chambre de solution de déchets ; le procédé d'électrodialyse étant **caractérisé en ce qu'**il comprend en outre les étapes consistant à :
appliquer une tension et une densité de courant à chacune des chambres pour que les ions potassium soient transportés de la chambre de solution de déchets via la membrane de dialyse par cations à la chambre cathodique et pour contrôler que le rapport molaire du dioxyde de silicium et de l'oxyde de potassium dans la chambre de solution de déchets est inférieur à 10.

2. Procédé selon la revendication 1, dans lequel la concentration de la solution d'acide sulfurique varie de 1 % en poids à 20 % en poids.

3. Procédé selon la revendication 2, dans lequel la concentration de la solution d'acide sulfurique varie de 2 % en poids à 15 % en poids.

4. Procédé selon la revendication 3, dans lequel la concentration de la solution d'acide sulfurique varie de 3 % en poids à 10 % en poids.

5. Procédé selon la revendication 1, dans lequel la concentration de la solution d'hydroxyde de potassium varie de 1 % en poids à 50 % en poids.

6. Procédé selon la revendication 5, dans lequel la concentration de la solution d'hydroxyde de potassium varie de 2 % en poids à 30 % en poids.

7. Procédé selon la revendication 6, dans lequel la concentration de la solution d'hydroxyde de potassium varie de 2 % en poids à 10 % en poids.

8. Procédé selon la revendication 1, dans lequel la concentration d'hydroxyde de potassium dans la solution de déchets de gravure à base d'hydroxyde de potassium contenant du silicate varie de 1 % en poids à 50 % en poids.

9. Procédé selon la revendication 1, dans lequel les membranes de dialyse par cations sont des membranes échangeuses de cations perfluorées.

10. Procédé selon la revendication 9, dans lequel les membranes de dialyse par cations sont sélectionnées parmi un groupe constitué d'une membrane à l'acide perfluorosulfonique, d'une membrane à l'acide perfluorocarboxylique, d'une membrane fluorée d'acide perfluorosulfonique / acide perfluorocarboxylique et d'une membrane à base de polymère de carbone.

11. Procédé selon la revendication 1, dans lequel la tension varie de 2 V à 25 V et la densité de courant varie de 1000 A/m² à 6 000 A/m².

12. Procédé selon la revendication 11, dans lequel la tension varie de 4 V à 20 V.

13. Procédé selon la revendication 12, dans lequel la tension varie de 5 V à 15 V et la densité de courant est de 2 000 A/m².

14. Procédé selon la revendication 1, dans lequel l'étape consistant à appliquer une tension et une densité de courant à chacune des chambres comprend la génération de gaz d'hydrogène dans la chambre cathodique et de gaz d'oxygène dans la chambre anodique.

15. Procédé selon la revendication 1, dans lequel le rapport molaire du dioxyde de silicium sur l'oxyde de potassium est inférieur à 5.
